# EUROPÄISCHE PATENTANMELDUNG

(11) **EP 3 667 183 A1**
(43) Veröffentlichungstag der Anmeldung: **17.06.2020**
(21) Anmeldenummer: 19214722.1
(22) Anmeldetag: 10.12.2019
(51) Int. Cl.: F24D 19/00, F24D 19/02, E04C 1/39

(54) **WANDBOX FÜR HEIZUNGSROHRE**

(30) Priorität: 10.12.2018 DE 102018131620
(71) Anmelder: Kessler, Sven, 75236 Kämpfelbach (DE)
(72) Erfinder: Kessler, Sven, 75236 Kämpfelbach (DE)
(74) Vertreter: Patentanwälte und Rechtsanwalt Weiß, Arat & Partner mbB

(57) **Zusammenfassung**

Die Erfindung betrifft eine Wandbox (1) zur Aufnahme und Halterung von Heizungsrohren (2.1, 2.2), bestehend aus einem Grundkörper (3), wobei der Grundkörper (3) aus einer Rückwand (4) besteht, wobei die Rückwand (4) zwei Längsseitenwandungen (5.1, 5.2) aufweist und die beiden Längsseitenwandungen (5.1, 5.2) nur einends mit einer Stirnwandung (6) verbunden sind, und andernends eine Ausnehmung (7) aufweisen, wobei ein Schiebedeckel (8) vorhanden ist.

## Beschreibung

### Technisches Gebiet

Die Erfindung betrifft eine Wandbox für Heizungsrohre nach dem Oberbegriff des Anspruchs 1.

### Stand der Technik

Derartige Wandboxen sind bereits in vielfältiger Form und Ausgestaltung bekannt und gebräuchlich. In diesem Zusammenhang wird auf ein Anschlusselement nach dem Stand der Technik in der DE 101 09 145 A1 hingewiesen.

Die DE 38 32 399 A1 offenbart ein Anschlusselement zum Aufnehmen eines Installationsrohres, dass einen Grundkörper mit einer Ausnehmung, in dem das Installationsrohr einzusehen ist, und eine Haltebacke auf, mit der das Installationsrohr durch Einstecken in die Ausnehmung des Grundkörpers festlegbar ist.

Ausserdem wird auf die DE 10 2013 101 389 A1 hingewiesen, welche einen Adapter für ein Anschlusselement zum Aufnehmen und/oder Festlegen zumindest einer Installationsleitung, insbesondere eines Heizungsrohr offenbart. Dabei ist ein Materialstreifen vorgesehen, der zur Befestigung beispielsweise mit einer Trockenbauwand dient.

Derartige Anschlusselemente zum Aufnehmen und/oder Verlegen zumindest einer Installationsleitung, insbesondere von Heizungsrohren sind in vielfältiger Form und Ausführung auf dem Markt bekannt und gebräuchlich. Sie dienen im Wesentlichen zum Aufnehmen von Leitungen und werden, bspw. vor dem Fertigstellen von Estrich und vor dem Fertigstellen von Installations- und Anschlussleitungen bspw. in eine Wand eines Gebäudes eingesetzt. Das Einsetzen kann bspw. durch Einschäumen, Einspachteln, Einkleben od. dgl. geschehen. Anschliessend kann bspw. der Trockenbauer oder Gipser die Wand vollständig fertigstellen. Gerade bei Trockenbauwänden ergibt sich aber der Nachteil, dass die eingezogenen Metallstreben der Trockenbauwand keine ausreichende Möglichkeit zur Befestigung des Anschlusselements bieten.

### Aufgabe der Erfindung

Die Aufgabe der vorliegenden Erfindung ist es, die Nachteile aus dem Stand der Technik zu überwinden. Insbesondere soll eine Wandbox zur Verfügung gestellt werden, die für unterschiedlich hoch aus einer Wand herausragende Heizungsrohre genutzt werden können soll.

### Lösung der Aufgabe

Zur Lösung der Aufgabe führen die Merkmale nach dem Anspruch 1.

Vorteilhafte Ausgestaltungen sind in den Unteransprüchen beschrieben.

Die erfindungsgemäße Wandbox dient zur Aufnahme und Halterung von Heizungsrohren. Insbesondere soll hierdurch ein vereinfachter Einbau möglich sein. Die Heizungsrohre sollen auf diese Weise vor-"installiert" zur Verfügung gestellt werden können, damit während des Rohbaus bereits eine Installation der Rohre möglich sein soll, wobei die Wandbox später in der Wand verbleibt und die Heizungsrohre an der definierten Position aus der Zimmerwand herausragen sollen.

Dabei besteht die Wandbox in erster Linie aus einem Grundkörper, wobei der Grundkörper aus einer Rückwand besteht, wobei die Rückwand zwei Längsseitenwandungen aufweist und die beiden Längsseitenwandungen und die Rückwand einends in eine Stirnwandung übergehen, und andernends eine Ausnehmung aufweisen.

Der Bunker weist dazu eine Schalenform auf, wobei diese Schale einends einen Abschluss in Form der Stirnwandung ausbildet. Andernends ist die Schalenform im Wesentlichen rechtwinklig abgeschnitten, sodass sich die Ausnehmung ausbildet.

Weiter ist erfindungsgemäß ein Schiebedeckel vorhanden. Der Schiebedeckel schließt die Schalenform des Grundkörpers derart ab das im Wesentlichen nur noch die Heizungsrohre aus dem Grundkörper herausragen.

Der Grundkörper weist zwei Heizungsrohr-Aufnahmemulden auf. Dabei handelt es sich in um zwei röhrenförmige Ausnehmungen, in welche die Heizungsrohre aufgenommen werden sollen. In einem Ausführungsbeispiel sind die beiden Heizungsrohre-Aufnahmemulden als zwei Ausbuchtungen der Rückwandung ausgebildet.

Der Grundkörper bildet an der Stirnwandung zwei Heizrohr-Manschetten aus. Diese Heizrohr-Manschetten dienen dem Schutz der beiden Heizungsrohre, wenn der Grundkörper in den Rohbau eingelassen wurde und der Abschluss-Putz auf die Zimmerwand aufgetragen wird. Dabei weisen die beiden Heizrohr-Manschetten eine Bauhöhe von beispielsweise 3-10 mm auf, sodass die Heizrohr-Manschetten auch nach dem aufgetragenen Abschluss-Putz noch ein Stück herausragen oder bündig mit dem Abschluss-Putz abschließen.

In einem bevorzugten Ausführungsbeispiel handelt es sich bei den beiden Heizrohr-Manschetten um Halbkreise oder Dreiviertelkreise.

Damit der Schiebedeckel mit dem Grundkörper bündig verbunden werden kann weist der Grundkörper eine Schiebedeckel-Führungsnut auf und der Schiebedeckel wiederum weist eine Führungsfeder auf. Auf diese Weise kann der Schiebedeckel schnell und einfach mit dem Grundkörper verbunden werden.

Der Schiebedeckel weist eine L-Form auf und besteht dabei aus einem Langabschnitt und einem Kurzabschnitt, wobei der Kurzabschnitt eine Anschlagswandung aufweist. Der Langabschnitt soll in Arbeitslage die in dem Grundkörper in Längserstreckung eingebrachten Heizungsrohre abdecken und der Kurzabschnitt dient dem Verschließen der Ausnehmung.

Die Anschlagswandung weist zwei erste Heizungsrohrdurchbrüche auf, wobei die Heizungsrohre in der Längserstreckung des Grundkörpers verlaufen. Das bedeutet, dass die Heizungsrohre in der Längserstreckung des Grundkörpers durch die Anschlagswandung hinaus nach unten weglaufen. Nach unten bedeutet hierbei die Seite, die der Stirnwandung entgegengesetzt ist.

In einem anderen Ausführungsbeispiel weist der Langabschnitt in einem Übergangsbereich zu der Anschlagswandung zwei zweite Heizungsrohrdurchbrüche auf, wobei die Heizungsrohre in einem rechten Winkel zu der Längserstreckung des Grundkörpers abgeknickt verlaufen. Der Übergangsbereich stellt die Ecke der L-Form dar, wobei die zwei zweiten Heizungsrohrdurchbrüche hier eben nicht in der Anschlagswandung ausgebildet sind, sondern im langen Abschnitt. Es handelt sich dabei um zwei kreisförmige Öffnungen, die in dem langen Abschnitt der Art ausgebildet sind, dass die Anschlagswandung quasi eine Tangente zu den kreisförmigen Öffnungen darstellt.

Der Grundkörper und der Schiebedeckel sind komplementär zueinander aufsetzbar und/oder ineinander verschiebbar. Dabei bedeutet komplementär, dass die beiden Heizungsrohre entweder im Bereich der Stirnwandung oder im Bereich der Anschlagswandung zwar aus dem Grundkörper herausragen sollen, aber der Grundkörper und der Schiebedeckel eine Einheit dabei bilden.

Der Schiebedeckel weist eine erste Ablängkennzeichnung und/oder der Grundkörper eine zweite Ablängkennzeichnung auf. Die erste Ablängkennzeichnung des Schiebedeckels kann dabei als visuelle Kennzeichnung oder auch als tatsächliche Kennzeichnung vom einer Erfüllung oder einer Einlassung an der Außenkante bestehen. In einem bevorzugten Ausführungsbeispiel handelt es sich um eine Einlassung an der Außenkante des Schiebedeckels. Dabei sind zwei auf gleicher Höhe angeordnete Einlassungen vorhanden, wobei oberhalb und/oder unterhalb parallel weitere solche Kennzeichnungen und Einlassungen vorhanden. Dabei weisen die parallel angeordneten Einlassungen jeweils den gleichen Abstand auf, wie die zweite Ablängkennzeichnung des Grundkörpers.

Auch der Grundkörper weist entsprechende Einlassungen an den beiden Seitenwandlungen des Grundkörpers auf. Die Einlassungen des Grundkörpers sind ebenfalls parallel zueinander ausgebildet und weisen den gleichen Abstand zueinander auf, sodass ein Nutzer, welcher die Länge des Schiebedeckel es beispielsweise an zwei Einlassungen ablängt, auch die Länge des Grundkörpers dadurch bestimmen kann und anpassen kann, dass er auch dort zwei Einlassungen bestimmt und abschneidet. Auf diese Weise ist die Länge des Schiebedeckels zur Länge des Grundkörpers anpassbar, sodass immer ein komplementäres Zusammenfügen der beiden Teile möglich ist.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: ist eine schematische Ansicht einer erfindungsgemäßen Wandbox gezeigt;
- Figur 2: ist eine andere schematische Seitenansicht der erfindungsgemäßen Wandbox nach Figur 1 gezeigt;
- Figur 3: ist eine Ansicht von hinten auf die Figur 1 gezeigt;
- Figur 4: ist eine längs-geschnittene Seitenansicht der Figur 3 gezeigt;
- Figur 5: ist eine quer-geschnittene Seitenansicht der Figur 3 gezeigt;
- Figur 6: ist eine schematische Ansicht einer anderen erfindungsgemäßen Wandbox gezeigt;
- Figur 7: ist eine andere schematische Seitenansicht der erfindungsgemäßen Wandbox nach Figur 6 gezeigt;
- Figur 8: ist eine Ansicht von hinten auf die Figur 6 gezeigt;
- Figur 9: ist eine längs-geschnittene Seitenansicht der Figur 7 gezeigt;
- Figur 10: ist eine quer-geschnittene Seitenansicht der Figur 7 gezeigt;

### Ausführungsbeispiel

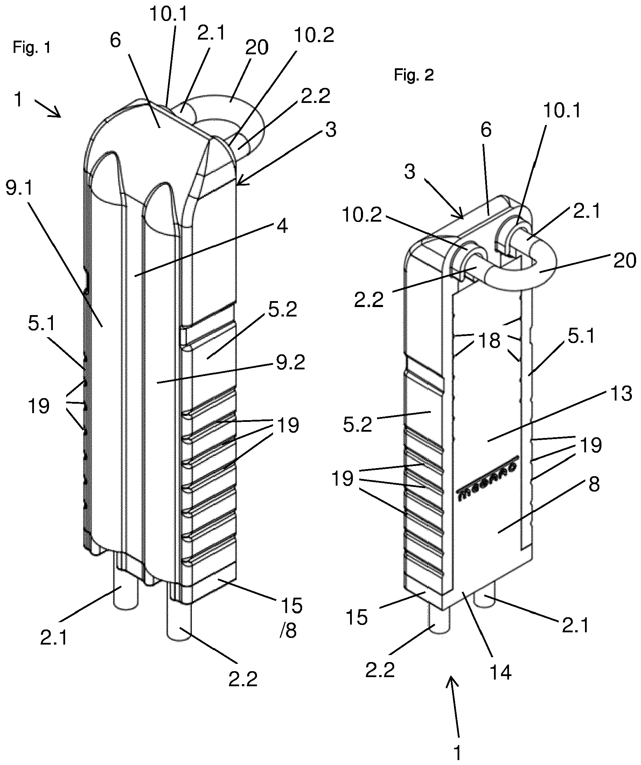

In der Figur 1 ist eine schematische Ansicht von schräg hinten auf die erfindungsgemäße Wandbox 1 gezeigt. Dabei besteht die Wandbox 1 aus einem Grundkörper 3 und einem Schiebedeckel 8, wobei der Schiebedeckel 8 besser in der Figur 2 zu erkennen ist. In der Wandbox 1 sind zwei Heizungsrohre 2.1, 2.2 aufgenommen. Sie ragen im Bereich des Schiebedeckels 8 nach unten heraus. Und im Bereich einer Stirnwandung 6 ragen die beiden Heizungsrohre 2.1, 2.2 ebenfalls etwa im rechten Winkel zu dem Grundkörper 3 heraus.

Der Grundkörper 3 wiederum besteht aus einer Rückwand 4, zwei Längsseitenwandungen 5.1, 5.2 und der Stirnwandung 6. Die beiden Längsseitenwandungen 5.1, 5.2 und die Rückwand 4 gehen einends in die Stirnwandung 6 über. Andernends ist eine Ausnehmung 7 vorhanden. Dabei geht die Rückwand 4 in einer Schräge zu der Stirnwandung 6 über.

Weiter weist der Grundkörper 3 zwei Heizungsrohr-Aufnahmemulden 9.1, 9.2 auf, wobei diese beiden Heizungsrohr-Aufnahmemulden 9.1, 9.2 in der Figur 1 als Ausbuchtungen der Rückwand 4 ausgebildet sind, wobei dies wiederum nicht zwingend ist.

Außerdem lässt sich in der Figur 1 an den Längsseitenwandungen 5.1, 5.2 eine zweite Ablängkennzeichnung 19 erkennen, welche als parallele Einkerbungen ausgebildet sind.

Auch lässt sich in der Figur 1 erkennen, wie der Grundkörper 3 an der Stirnwandung 6 zwei Heizrohr-Manschetten 10.1, 10.2 ausbildet. Daneben gegen die beiden Heizungsrohre 2.1, 2.2 im Bereich der Stirnwandung 6 in ein U-Rohr 20 über.

In der Figur 2 lässt sich neben der zweiten Ablängkennzeichnung 19 des Grundkörpers 3 eine erste Ablängkennzeichnung 18 des Schiebedeckels 8 erkennen. Dabei handelt es sich ebenfalls um Einkerbungen an einer Außenkante des Schiebedeckels 8.

Neben den bereits in Figur 1 beschriebenen Merkmalen, auf die für die Figur 2 ausdrücklich Bezug genommen wird, Ist gut zu erkennen, wie der Schiebedeckel 8 eine L-Form aufweist, wobei die L-Form aus einem Langabschnitt 13 und einen Kurzabschnitt 14 besteht, wobei der Kurzabschnitt 14 gleichzeitig auch die Anschlagswandung 15 ist.

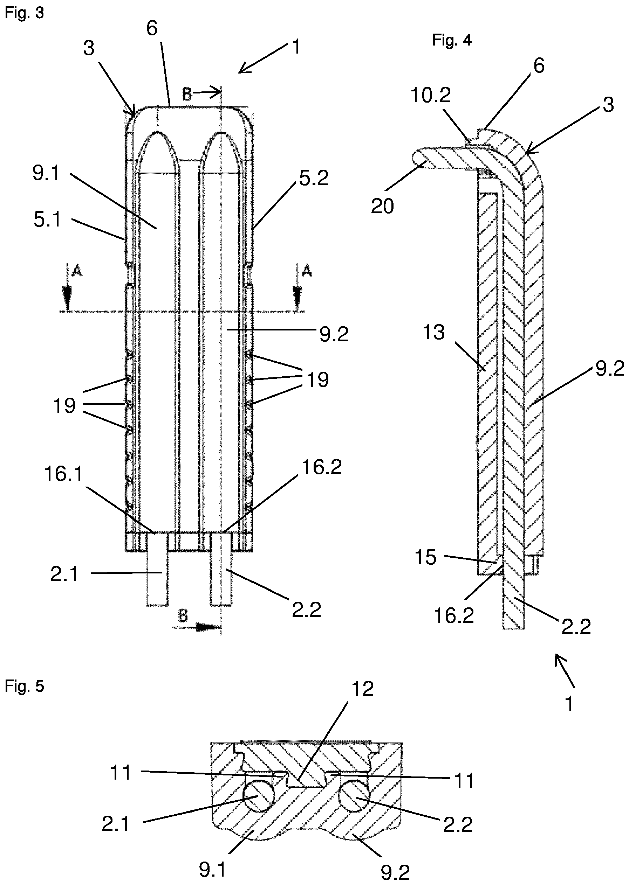

Auch für die Figur 3 gelten viele Figuren 1 und 2 gemachten Ausführungen, wobei dies insbesondere dann gelten soll, wenn für die gleichen Merkmale die gleichen Bezugsziffern benutzt worden. Unabhängig zu den obigen Ausführungen sind ergänzend in der Figur 3 zwei erste Heizungsrohrdurchbrüche 16.1, 16.2 gezeigt. Diese beiden ersten Heizungsrohrdurchbrüche 16.1, 16.2 sind derart ausgebildet, dass die beiden Heizungsrohre 2.1, 2.2 nach unten aus dem Grundkörper 3 heraus verlaufen. Nach unten bedeutet hierbei die Seite des Grundkörpers 3, welche entgegengesetzt zu der Stirnwandung 6 angeordnet ist. Dabei ist die Wandbox 1 so ausgebildet, dass die Anschlagswandung 15 eben zwei erste Heizungsrohrdurchbrüche 16.1, 16.2 aufweist, wobei die Heizungsrohre 2.1, 2.2 in der Längserstreckung des Grundkörpers 3, also nach unten wegverlaufen.

Weiter sind zwei Schnittlinien A-A und B-B in der Figur 3 gezeigt. Die Schnittlinie B-B ist in der Figur 4 gezeigt und die Schnittlinie A-A ist in der Figur 5 näher gezeigt. Bezüglich der Figur 4 wird auf das oben Gesagte nochmals Bezug genommen. Auf eine Wiederholung der einzelnen Merkmale wird ausdrücklich verzichtet.

In der Figur 5 ist ein Querschnitt der Figur 3 gezeigt, wobei der Grundkörper 3 eine Schiebedeckel-Führungsnut 11 aufweist und der Schiebedeckel 8 eine Führungsfeder 12 aufweist.

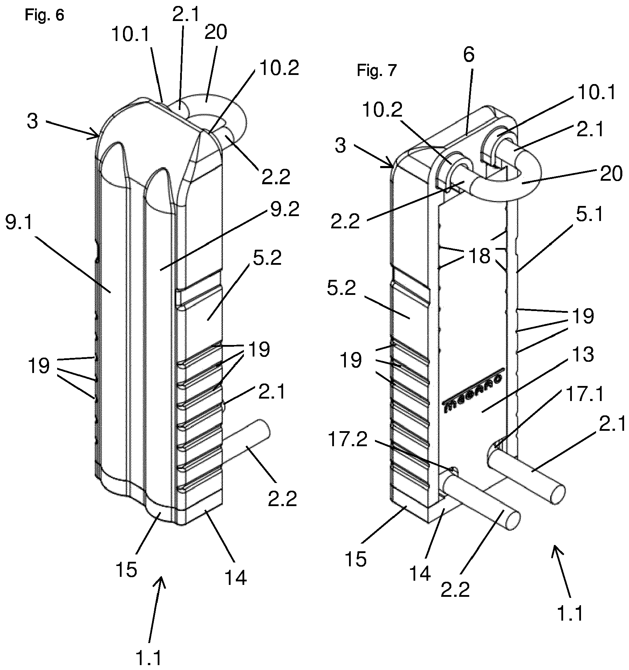

In der Figur 6 ist eine schematische Ansicht von schräg hinten auf die erfindungsgemäße Wandbox 1.1 gezeigt. Dabei besteht die Wandbox 1.1 auch aus dem Grundkörper 3 und dem Schiebedeckel 8, wobei der Schiebedeckel 8 besser in der Figur 7 zu erkennen ist. In der Wandbox 1.1 sind ebenfalls zwei Heizungsrohre 2.1, 2.2 aufgenommen. Sie ragen im Bereich des Schiebedeckels 8 seitlich aus dem Langabschnitt 13 heraus. Und im Bereich einer Stirnwandung 6 ragen die beiden Heizungsrohre 2.1, 2.2 ebenfalls etwa im rechten Winkel zu dem Grundkörper 3 heraus.

Der Grundkörper 3 besteht auch hier wiederum aus der Rückwand 4, den beiden Längsseitenwandungen 5.1, 5.2 und der Stirnwandung 6. Die beiden Längsseitenwandungen 5.1, 5.2 und die Rückwand 4 gehen ebenfalls einends in die Stirnwandung 6 über. Andernends ist auch die Ausnehmung 7 vorhanden. Dabei geht die Rückwand 4 in einer Schräge zu der Stirnwandung 6 über.

Weiter weist der Grundkörper 3 die beiden Heizungsrohr-Aufnahmemulden 9.1, 9.2 auf, wobei diese beiden Heizungsrohr-Aufnahmemulden 9.1, 9.2 in der Figur 1 als Ausbuchtungen der Rückwand 4 ausgebildet sind, wobei dies wiederum nicht zwingend ist.

Außerdem lässt sich in der Figur 6 an den Längsseitenwandungen 5.1, 5.2 die zweite Ablängkennzeichnung 19 erkennen, welche als parallele Einkerbungen ausgebildet sind.

Auch lässt sich in der Figur 6 erkennen, wie der Grundkörper 3 an der Stirnwandung 6 die beiden Heizrohr-Manschetten 10.1, 10.2 ausbildet. Daneben gehen die beiden Heizungsrohre 2.1, 2.2 im Bereich der Stirnwandung 6 in das U-Rohr 20 über.

In der Figur 7 lässt sich neben der zweiten Ablängkennzeichnung 19 des Grundkörpers 3 die erste Ablängkennzeichnung 18 des Schiebedeckels 8 erkennen. Dabei handelt es sich ebenfalls um Einkerbungen an der Außenkante des Schiebedeckels 8.

Neben den bereits in Figur 6 beschriebenen Merkmalen, auf die für die Figur 7 ausdrücklich Bezug genommen wird, ist gut zu erkennen, wie der Schiebedeckel 8 eine L-Form aufweist, wobei die L-Form aus einem Langabschnitt 13 und einen Kurzabschnitt 14 besteht, wobei der Kurzabschnitt 14 gleichzeitig auch die Anschlagswandung 15 ist.

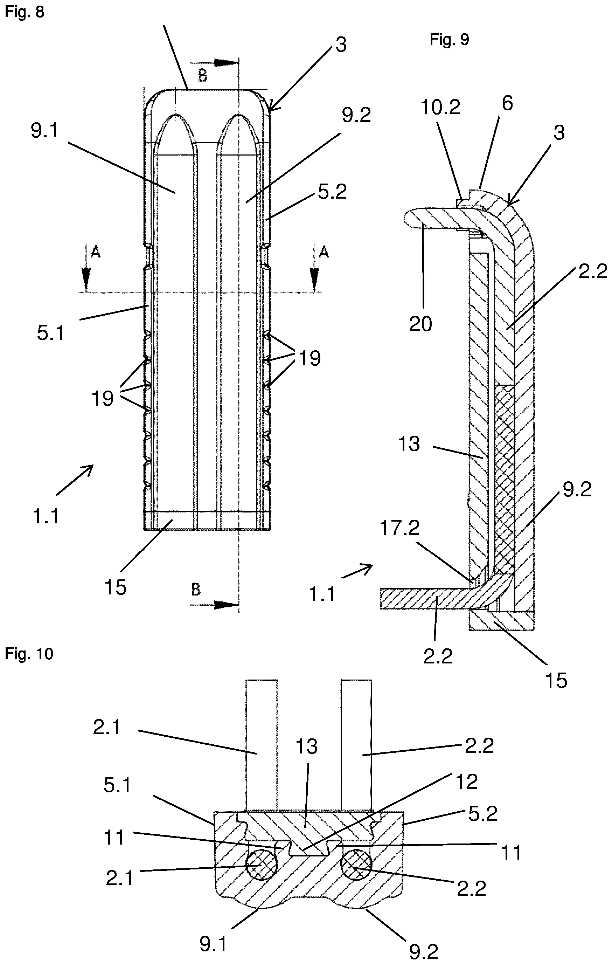

Auch für die Figur 8 gelten die für Figuren 6 und 7 gemachten Ausführungen, wobei dies insbesondere dann gelten soll, wenn für die gleichen Merkmale die gleichen Bezugsziffern benutzt worden.

Unabhängig zu den obigen Ausführungen sind ergänzend in der Figur 7 zwei zweite Heizungsrohrdurchbrüche 17.1, 17.2 gezeigt. Diese beiden zweiten Heizungsrohrdurchbrüche 17.1, 17.2 sind derart ausgebildet, dass die beiden Heizungsrohre 2.1, 2.2 aus dem Langabschnitt 13 herausragen.

Der Langabschnitt 13 weist im Übergangsbereich zu der Anschlagswandung 15 die beiden zweiten Heizungsrohrdurchbrüche 17.1, 17.2 auf, wobei die Heizungsrohre 2.1, 2.2 in einem rechten Winkel zu der Längserstreckung des Grundkörpers 3 abgeknickt verlaufen. Dies lässt sich besonders gut in der Figur 9 erkennen.

Weiter sind in der Figur 8 zwei Schnittlinien A-A und B-B gezeigt. Die Schnittlinie B-B ist in der Figur 9 gezeigt und die Schnittlinie A-A ist in der Figur 10 näher gezeigt. Bezüglich der Figur 9 wird auf das oben Gesagte nochmals Bezug genommen. Auf eine Wiederholung der einzelnen Merkmale wird ausdrücklich verzichtet.

In der Figur 10 ist ein Querschnitt der Figur 8 gezeigt, wobei der Grundkörper 3 auch hier die Schiebedeckel-Führungsnut 11 aufweist und der Schiebedeckel 8 eine Führungsfeder 12 aufweist.

Der Grundkörper 3 und der Schiebedeckel 8 sind in bei den beiden Wandboxen 1, 1.1 komplementär zueinander aufsetzbar und/oder ineinander verschiebbar ausgebildet.

**Bezugszeichenliste**

| | |
|---|---|
| 1 | Wandbox |
| 2 | Heizungsrohr |
| 3 | Grundkörper |
| 4 | Rückwand |
| 5 | Seitenwandung |
| 6 | Stirnwandung |
| 7 | Ausnehmung |
| 8 | Schiebedeckel |
| 9 | Heizungsrohr-Aufnahmemulden |
| 10 | Heizrohr- Manschetten |
| 11 | Schiebedeckel-Führungsnuten |
| 12 | Führungsfeder |
| 13 | Langabschnitt |
| 14 | Kurzabschnitt |
| 15 | Anschlagswandung |
| 16 | erster Heizungsrohrdurchbruch |
| 17 | zweiter Heizungsrohrdurchbruch |
| 18 | Erste Ablängkennzeichnung |
| 19 | Zweite Ablängkennzeichnung |
| 20 | U-Rohr |
| 21 | |
| 22 | |
| 23 | |
| 24 | |
| 25 | |
| 26 | |
| 27 | |
| 28 | |
| 29 | |
| 30 | |
| 31 | |
| 32 | |
| 33 | |

## Patentansprüche

1. Wandbox (1) zur Aufnahme und Halterung von Heizungsrohren (2.1, 2.2), bestehend aus einem Grundkörper (3), wobei der Grundkörper (3) aus einer Rückwand (4) besteht, wobei die Rückwand (4) zwei Längsseitenwandungen (5.1, 5.2) aufweist und die beiden Längsseitenwandungen (5.1, 5.2) und die Rückwand (4) einends in eine Stirnwandung (6) übergehen, und andernends eine Ausnehmung (7) aufweisen,
**dadurch gekennzeichnet, dass**
ein Schiebedeckel (8) vorhanden ist.

2. Wandbox (1) nach Anspruch 1, **dadurch gekennzeichnet, dass** der Grundkörper (3) zwei Heizungsrohr-Aufnahmemulden (9.1, 9.2) aufweist.

3. Wandbox (1) nach Anspruch 1 oder 2, **dadurch gekennzeichnet, dass** der Grundkörper (3) an der Stirnwandung (6) zwei Heizrohr-Manschetten (10.1, 10.2) ausbildet.

4. Wandbox (1) nach einem der vorigen Ansprüche, **dadurch gekennzeichnet, dass** der Grundkörper (3) eine Schiebedeckel-Führungsnut (11) aufweist.

5. Wandbox (1) nach einem der vorigen Ansprüche, **dadurch gekennzeichnet, dass** der Schiebedeckel (8) eine Führungsfeder (12.1, 12.2) aufweist.

6. Wandbox (1) nach einem der vorigen Ansprüche, **dadurch gekennzeichnet, dass** der Schiebedeckel (8) eine L-Form aufweist und dabei aus einem Langabschnitt (13) und einem Kurzabschnitt (14) besteht, wobei der Kurzabschnitt (14) eine Anschlagswandung (15) aufweist.

7. Wandbox (1) nach Anspruch 6, **dadurch gekennzeichnet, dass** die Anschlagswandung (15) zwei erste Heizungsrohrdurchbrüche (16.1, 16.2) aufweist, wobei die Heizungsrohre (2.1, 2.2) in der Längserstreckung des Grundkörpers (3) verlaufen.

8. Wandbox (1) nach einem der Ansprüche 6 oder 7, **dadurch gekennzeichnet, dass** der Langabschnitt (13) im Übergangsbereich zu der Anschlagswandung (15) zwei zweite Heizungsrohrdurchbrüche (17.1, 17.2) aufweist, wobei die Heizungsrohre (2.1, 2.2) in einem rechten Winkel zu der Längserstreckung des Grundkörpers (3) abgeknickt verlaufen.

9. Wandbox (1) nach einem der vorigen Ansprüche, **dadurch gekennzeichnet, dass** der Grundkörper (3) und der Schiebedeckel (8) komplementär zueinander aufsetzbar und/oder ineinander verschiebbar sind.

10. Wandbox (1) nach einem der vorigen Ansprüche, **dadurch gekennzeichnet, dass** der Schiebedeckel (8) eine erste Ablängkennzeichnung (18) und/oder der Grundkörper (3) eine zweite Ablängkennzeichnung (19) aufweist.
